# EUROPÄISCHE PATENTSCHRIFT

(11) **EP 1 630 380 B1**
(45) Veröffentlichungstag und Bekanntmachung des Hinweises auf die Patenterteilung: **18.05.2011**
(21) Anmeldenummer: 04104033.8
(22) Anmeldetag: 23.08.2004
(51) Int. Cl.: F02B 23/06

(54) **Verfahren zur Direkteinspritzung von Kraftstoff in den Brennraum einer Brennkraftmaschine und System umfassend eine Einspritzdüse und einen Kolben zur Durchführung des Verfahrens**
Method to inject fuel directly into the combustion chamber of an engine and system comprising a fuel injector and a piston to carry out the method
Méthode d'injection de carburant dans la chambre de combustion d'un moteur à combustion interne avec en injecteur et en piston pour la mise en oeuvre de ce procédé

(43) Veröffentlichungstag der Anmeldung: 01.03.2006
(73) Patentinhaber: Ford Global Technologies, LLC, A subsidary of Ford Motor Company, Dearborn, MI 48126 (US)
(72) Erfinder: Karvounis, Evangelos, 52070 Aachen (DE); Bikas, Georgios, 52146 Würselen (DE)
(74) Vertreter: Drömer, Hans-Carsten

(56) Entgegenhaltungen:
- EP-A- 0 845 589
- EP-A- 1 264 973
- GB-A- 1 473 696
- US-A1- 2003 168 037
- PATENT ABSTRACTS OF JAPAN Bd. 0170, Nr. 80 (M-1368), 17. Februar 1993 (1993-02-17) & JP 4 279723 A (YANMAR DIESEL ENGINE CO LTD), 5. Oktober 1992 (1992-10-05)
- PATENT ABSTRACTS OF JAPAN Bd. 2003, Nr. 04, 2. April 2003 (2003-04-02) & JP 2002 364366 A (TOYOTA MOTOR CORP; TOYOTA INDUSTRIES CORP), 18. Dezember 2002 (2002-12-18)
- PATENT ABSTRACTS OF JAPAN Bd. 1999, Nr. 05, 31. Mai 1999 (1999-05-31) & JP 11 036868 A (MAZDA MOTOR CORP), 9. Februar 1999 (1999-02-09)
- PATENT ABSTRACTS OF JAPAN Bd. 2000, Nr. 25, 12. April 2001 (2001-04-12) & JP 2001 227346 A (HONDA MOTOR CO LTD), 24. August 2001 (2001-08-24)

## Beschreibung

Die Erfindung betrifft ein Verfahren zur Direkteinspritzung von Kraftstoff in den Brennraum einer Brennkraftmaschine, insbesondere zu dem Zweck einer verbesserten Gemischbildung, wobei der Brennraum durch den Kolbenboden eines Kolbens und einem Zylinderrohr mitbegrenzt wird, bei dem mittels einer zur Kolbenlängsachse im wesentlichen vertikal angeordneten Einspritzdüse mindestens eine Einspritzung von Kraftstoff vorgenommen wird.

Des Weiteren betrifft die Erfindung ein System umfassend eine Einspritzdüse und einen Kolben, insbesondere zur Durchführung eines Verfahrens der oben genannten Art, bei dem die im wesentlichen vertikal zur Kolbenlängsachse angeordnete Einspitzdüse Düsenöffnungen aufweist, über die Kraftstoff in Form eines kegelförmigen Einspritzstahls einspritzbar ist, und eine im Kolbenboden vorgesehene Kolbenmulde eine Omegaförmige Grundform aufweist.

Der Marktanteil kleiner schnellaufender Dieselmotoren nimmt ständig zu. Die Gründe hierfür liegen einerseits in dem niedrigen Kraftstoffverbrauch und andererseits in dem - im Vergleich zu älteren Dieselmotoren - guten Leistungsangebot der modernen Dieselmotoren der jüngeren Generationen. Der geringe Kraftstoffverbrauch resultiert unter anderem aus einem hohen Verdichtungsverhältnis und geringen Ladungswechselverlusten aufgrund der Qualitätsregelung des Dieselmotors.

Nachteile weisen Dieselmotoren aber insbesondere hinsichtlich einzelner Schadstoffe auf, nämlich dem Ruß und der Stickoxide (NOₓ).

Herkömmliche Einspritzverfahren für Dieselmotoren spritzen gegen Ende der Kompressionsphase den Kraftstoff in die im Brennraum verdichtete Luft ein. Für die Einspritzung des Kraftstoffes, die Gemischaufbereitung, nämlich die Durchmischung von Luft und Kraftstoff und die Aufbereitung des Kraftstoffes im Rahmen von Vorreaktionen einschließlich der Verdampfung, sowie der Selbstzündung des aufbereiteten Gemisches und der Verbrennung stehen bei kleinen schnellaufenden Dieselmotoren nur sehr kurze Zeiträume in der Größenordnung von Millisekunden zur Verfügung. Infolgedessen liegt in der Regel während der Zündung und Verbrennung ein sehr inhomogenes Kraftstoff-Luft-Gemisch vor, welches nicht durch ein einheitliches Luftverhältnis charakterisiert wird, sondern sowohl sehr magere Gemischteile als auch sehr fette Gemischteile aufweist.

Dabei wird in Gemischteilen mit einem unterstöchiometrischen lokalen Luftverhältnis und bei Temperaturen oberhalb 1300°K unter extremen Luftmangel Ruß gebildet. Zur Minimierung der Emission von Rußpartikeln werden nach dem Stand der Technik sogenannte regenerierbare Partikelfilter eingesetzt, die die Rußpartikel aus dem Abgas herausfiltern und speichern, wobei diese Rußpartikel im Rahmen der Regeneration des Filters intermittierend verbrannt werden. Die Intervalle der Regeneration werden dabei durch den Abgasgegendruck, der sich infolge des zunehmenden Strömungswiderstandes des Filters aufgrund der anwachsenden Partikelmasse im Filter einstellt, bestimmt.

Zudem ist das herkömmliche dieselmotorische Verfahren aufgrund der prozeßbedingten hohen Temperaturen durch hohe Stickoxidemissionen (NOₓ) gekennzeichnet. Bei Brennkraftmaschinen, die mit einem Luftüberschuß betrieben werden, insbesondere direkteinspritzenden Dieselmotoren, können die im Abgas befindlichen Stickoxide prinzipbedingt - d. h. aufgrund der fehlenden Reduktionsmittel - nicht reduziert werden. Zur Reduzierung der Stickoxide werden deshalb selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet.

Grundsätzlich kann den Stickoxiden auch mit sogenannten Stickoxidspeicherkatalysatoren entgegengetreten werden. Dabei werden die Stickoxide zunächst während einer Speicherphase im Katalysator gesammelt, um dann während einer Regenerationsphase mittels eines unterstöchiometrischen Betriebs (beispielsweise λ < 0,95) der Brennkraftmaschine reduziert zu werden. Speicherkatalysatoren setzen aber - zur Vermeidung hoher Rußemissionen - die Verbrennung eines homogenen Gemisches voraus, weshalb sie zwar für magerbetriebene Ottomotoren, aber insbesondere nicht für direkteinspritzende Brennkraftmaschinen geeignet sind.

Die Notwendigkeit, einen SCR-Katalysator und/oder einen Partikelfilter vorzusehen, macht die Abgasnachbehandlung eines Dieselmotors sehr aufwendig und kostenintensiv.

Die ausführlich beschriebenen negativen Auswirkungen des inhomogenen Gemisches auf die Schadstoffemissionen, nämlich den Partikelemissionen und den Stickoxidemissionen, lassen sich nach dem Stand der Technik bei herkömmlichen Dieselmotoren durch innermotorische Maßnahmen aber nicht vermeiden.

Um dennoch eine möglichst gute Gemischaufbereitung zu erzielen, weist bei herkömmlichen dieselmotorischen Verfahren der Einspritzstrahl einen großen Öffnungswinkel α > 145° auf, vorzugsweise α > 160°. Dadurch wird nahezu der gesamte Brennraum von dem eingespritzten Kraftstoff erfaßt d.h. der weite Einspritzstrahl gewährleistet eine gute Luftausnutzung der im Brennraum komprimierten Luft. Dies erweist sich insbesondere als Vorteil bei hohen Lasten, wenn eine große Kraftstoffmenge in den Brennraum eingespritzt wird und insbesondere mit dem Ziel niedriger Rußemissionen eine gute Durchmischung angestrebt wird, und bei Betriebspunkten mit hohen Drehzahlen, bei denen nur eine kurze Zeitspanne zur Gemischaufbereitung, Zündung und Verbrennung zur Verfügung steht.

Im Rahmen der vorliegenden Erfindung wird als Einspritzstrahl die Summe der durch die Düsenöffnungen der Einspritzdüse eingespritzten Kraftstoffstrahlen bezeichnet, so daß der Begriff "kegelförmiger Einspritzstrahl" den durch die Kraftstoffstrahlen aufgespannten Kegel kennzeichnet.

Der sehr weite Einspritzstrahl macht die Brennkraftmaschine aber wiederum anfällig im Hinblick auf eine Verdünnung bzw. Kontaminierung des Öls durch unverbrannte Kohlenwasserstoffe, da ein nicht unwesentlicher Teil des eingespritzten Kraftstoffes auf die Zylinderinnenwand trifft. In Abhängigkeit vom Einspritzzeitpunkt, gelangt ein mehr oder weniger großer Anteil des eingespritzten Kraftstoffes auf die Zylinderinnenwand und mischt sich dort mit dem anhaftenden Ölfilm. Anschließend gelangt der Kraftstoff zusammen mit dem Öl und dem Blow-by Gas in das Kurbelgehäuse und trägt so maßgeblich zur Ölverdünnung bei. Die Ölverdünnung nimmt mit steigender Kraftstoffmenge und Verschieben des Einspritzzeitpunktes nach früh zu. Durch die Veränderung der Schmierstoffeigenschaften des Öls hat die Ölverdünnung maßgeblich Einfluß auf den Verschleiß und die Haltbarkeit d. h. die Lebensdauer der Brennkraftmaschine. Zudem erhöhen sich die Emissionen an unverbrannten Kohlenwasserstoffen.

Aus diesem Grund wird vorzugsweise gegen Ende der Kompressionsphase eingespritzt, wenn der in Richtung des oberen Totpunktes (OT) bewegte Kolben weite Bereiche der Zylinderinnenwand verdeckt und der Kolbenboden nahe der Einspritzdüse angeordnet ist, so daß der überwiegende Anteil des Kraftstoffes auf den Kolbenboden, vorzugsweise in eine im Kolbenboden vorgesehene Kolbenmulde, trifft.

Insbesondere bei dem traditionellen dieselmotorischen Verfahren ist eine enge Anbindung von Einspritzung und Verbrennung gewollt, um die Selbstzündung des Kraftstoffes vorhersagbar zu machen und die Leistungsabgabe besser steuern zu können. Ein wesentliches Merkmal dieses herkömmlichen Verfahrens ist, daß die Verbrennung mittels einer Diffusionsflamme kontrolliert wird.

Brennkraftmaschine mit omegaförmiger Kolbenmulde sind aus JP 2004 279 723 A, JP 11 036 868 A und JP 2002 364 366 A bekannt.

Aus dem zuvor Gesagten ergibt sich, daß Weiterentwicklungen des herkömmlichen dieselmotorischen Verfahrens durch eine Vielzahl von verfahrensbedingten Restriktionen stark eingeschränkt werden.

Aufgrund der immer strengeren Gesetzgebung bezüglich der Schadstoffemissionen von Kraftfahrzeugen werden zunehmend neue Brennverfahren entwickelt und untersucht. Häufig sind dies Hybrid-Brennverfahren, die versuchen, die Vorteile des dieselmotorischen Verfahrens mit den Vorteilen des ottomotorischen Verfahrens zu verbinden. Dabei konzentrieren sich die Entwicklungsarbeiten in erster Linie auf die wesentlichen Merkmale der beiden Verfahren.

Das ottomotorische Verfahren ist dabei gekennzeichnet durch eine Gemischverdichtung, ein homogenes Gemisch, eine Fremdzündung, sowie die Quantitätsregelung, wohingegen das dieselmotorische Verfahren charakterisiert ist durch eine Luftverdichtung, ein inhomogenes Gemisch, eine Selbstzündung und die Qualitätsregelung.

Ein Brennverfahren, das - im Vergleich zu dem oben beschriebenen herkömmlichen dieselmotorischen Verfahren - im Hinblick auf die kritischen Schadstoffemissionen, nämlich Ruß und NOₓ, wesentlich günstiger ist, ist das sogenannte HCCI-Verfahren.

Das HCCI-Verfahren, das seinen Namen von der englischen Bezeichnung "homogenous-charge compression-ignition" ableitet, ist ein erst vor kurzem wieder in den Focus gerücktes Brennverfahren zum Betreiben einer Brennkraftmaschine. Dieses Verfahren, das in der Fachwelt auch als CAI-Verfahren (Controlled Auto-Ignition) bezeichnet wird, basiert auf einer kontrollierten Selbstzündung des dem Zylinder zugeführten Kraftstoffes.

Dabei wird der Kraftstoff unter Luftüberschuß - also überstöchiometrisch - verbrannt. Der im mageren Bereich betriebene Dieselmotor weist aufgrund des stark verdünnten homogenisierten Kraftstoff-Luftgemisches und der damit verbundenen niedrigen Verbrennungstemperaturen vergleichsweise geringe Stickoxidemissionen (NOₓ) auf und ebenfalls infolge des mageren homogenisierten Gemisches keine Rußemissionen.

Aufgrund der niedrigeren Verbrennungstemperaturen und der damit verbundenen geringeren Temperaturdifferenzen in der Brennkraftmaschine sind die Wärmverluste geringer als bei herkömmlich betriebenen Brennkraftmaschinen.

Zudem ist der thermische Wirkungsgrad des HCCI-Verfahrens hoch, da das homogenisierte Gemisch volumetrisch verbrennt, d. h. sich keine Diffusionsflamme durch den Brennraum fortpflanzt, sondern im gesamten Brennraum nahezu gleichzeitig bei konstantem Volumen gezündet und verbrannt wird.

Das HCCI-Verfahren und eine Brennkraftmaschine, die dieses Verfahren zur Verbrennung des Kraftstoffes verwendet, werden in der US 6,390,054 B1 beschrieben, wobei die Brennkraftmaschine ein Ottomotor ist, so daß nicht sämtliche in der US 6,390,054 B1 gemachten Ausführungen auf den hier in Rede stehenden Dieselmotor übertragbar sind.

Dies liegt insbesondere darin begründet, daß die Eigenschaften von Benzin einerseits und Dieselkraftstoff andererseits doch zu unterschiedlich sind. So ist Dieselkraftstoff im Vergleich zu Benzin leichter entzündbar, weshalb eine sichere Selbstzündung in der Regel gegeben ist und Fehlzündungen und Zündaussetzer beim Dieselmotor eher unerheblich sind. Dafür ist aber Dieselkraftstoff schwerer zu verdampfen, was hohe Anforderungen an die Gemischaufbereitung stellt.

Trotz des sehr günstigen Emissionsverhaltens weist das dieselmotorische HCCI-Verfahren auch mehrere Nachteile auf, die denen des ottomotorischen HCCI-Verfahrens ähnlich sind.

Der wesentliche Nachteil des HCCI-Verfahrens besteht darin, daß dieses Verfahren nicht in sämtlichen Betriebspunkten einer Brennkraftmaschine eingesetzt werden kann, so daß sich die - oben bereits beschriebenen - Vorteile nur in einem kleinen Bereich des Motorkennfeldes (Last über Drehzahl) nutzen lassen. Dies ist auch der Grund dafür, daß nach dem Stand der Technik eine Brennkraftmaschine nicht ausschließlich nach dem HCCI-Verfahren betrieben werden kann, sondern grundsätzlich ein Hybridantrieb bzw. ein Hybrid-Brennverfahren erforderlich ist, um die Brennkraftmaschine in den Betriebspunkten, in denen das HCCI-Verfahren versagt, trotzdem betrieben zu können. Eine derartige Hybrid-Brennkraftmaschine ist beispielsweise Gegenstand der US 6,390,054 B1.

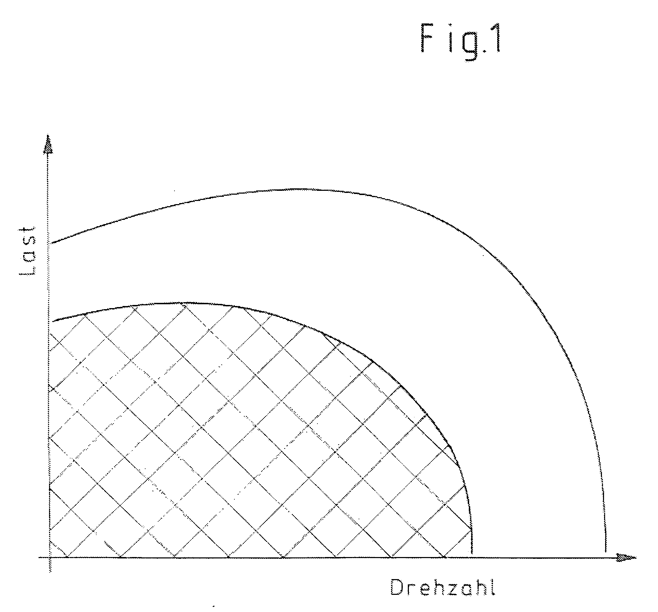

Figur 1 zeigt beispielhaft das Motorkennfeld eines Dieselmotors, in das der Bereich, in dem das herkömmliche HCCI-Verfahren zur Anwendung kommen kann, schraffiert eingezeichnet ist. Das HCCI-Verfahren kann danach nicht bei hohen Lasten und hohen Drehzahlen eingesetzt werden. Die Gründe hierfür werden im folgenden kurz dargelegt.

Grundsätzlich ergeben sich die Beschränkungen in der Anwendung des HCCI-Verfahrens aus der Steuerung des Zündzeitpunktes der Selbstzündung und der Steuerung der Brenngeschwindigkeit d. h. des Brennverlaufs. Die Selbstzündung reagiert sehr empfindlich auf die Temperatur der Zylinderladung, auf die Drehzahl und die Eigenschaften des eingesetzten Kraftstoffs. Folglich ist das HCCI-Verfahren in weiten Betriebsbereichen nur schwer zu steuern.

Mit zunehmender Last wird die Selbstzündung infolge des abnehmenden Luftverhältnisses nach früh verschoben d. h. das Kraftstoff-Luftgemisch zündet in der Kompressionsphase zu einem früheren Zeitpunkt, wobei die Umsatzraten bzw. die Brenngeschwindigkeit ebenfalls zunehmen. Durch die frühere und schwerer zu steuernde Verbrennung und insbesondere durch die schnellere Brenngeschwindigkeit wird der Lauf der Brennkraftmaschine ungleichförmiger und härter, wobei letzteres vergleichbar ist mit dem für Dieselmotoren typischen Dieselnageln, das ebenfalls durch einen steilen Druckanstieg infolge der sprunghaft einsetzenden Verbrennung verursacht wird. Zudem sinkt infolge der weit vor dem oberen Totpunkt (OT) freigesetzten Verbrennungswärme der thermische Wirkungsgrad.

Mit zunehmender Drehzahl wird die Zeit, die zur Aufbereitung des Kraftstoff-Luftgemisches im Rahmen von Vorreaktionen zur Verfügung gestellt wird, verkürzt, so daß bei hohen Drehzahlen der Schwerpunkt der Verbrennung nach spät verschoben wird, wodurch sich der thermische Wirkungsgrad des Verbrennungsprozesses verschlechtert.

Um das HCCI-Verfahren dennoch für den Dieselmotor nutzbar zu machen, müssen neue Brennverfahren bzw. Einspritzverfahren entwickelt werden und die herkömmlichen Brennkraftmaschinen in der Art ausgelegt werden, das sie sowohl mit dem herkömmlichen dieselmotorischen Verfahren als auch mit dem HCCI-Verfahren betrieben werden können, so daß - abhängig vom Betriebspunkt der Brennkraftmaschine im Motorkennfeld - entweder das HCCI-Verfahren oder das traditionelle dieselmotorische Verfahren zum Einsatz kommen kann.

Schwierigkeiten ergeben sich dabei insbesondere durch die unterschiedlichen Anforderungen, die die beiden Verfahren, das HCCI-Verfahren einerseits und das traditionelle dieselmotorische Verfahren andererseits, an die Einspritzung stellen. So erfordert das traditionelle dieselmotorische Verfahren zur besseren Luftausnutzung einen weiten Einspritzstrahl, so daß zur Vermeidung einer Ölverdünnung und zur Vermeidung hoher Emissionen an unverbrannten Kohlenwasserstoffen spät eingespritzt werden sollte. Hingegen wird das HCCI-Verfahren durch eine frühe Einspritzung unterstützt, die die Homogenisierung des Gemisches verbessert. Zusammen mit einem weiten Einspritzstrahl führt dies aber dazu, daß der eingespritzte Kraftstoff teilweise an der Zylinderrohrinnenwand auftrifft mit den bereits genannten Nachteilen.

An dieser Stelle sei darauf hingewiesen, daß das HCCI-Verfahren grundsätzlich auch durch eine sehr späte Einspritzung, beispielsweise 15°KW bis 20°KW nach OT unterstützt wird. Zwar nimmt in der Expansionsphase der Druck und die Temperatur ab und damit der Zündverzug zu. Doch auch bei in die Expansionsphase eingespritztem Kraftstoff werden die für die Selbstzündung erforderlichen Randbedingungen erreicht.

Vor diesem Hintergrund ist es die Aufgabe der vorliegenden Erfindung, ein Verfahren zur Direkteinspritzung von Kraftstoff in den Brennraum einer Brennkraftmaschine gemäß dem Oberbegriff des Anspruches 1 aufzuzeigen, mit dem Dieselmotoren sowohl mit dem herkömmlichen dieselmotorischen Verfahren als auch mit dem HCCI-Verfahren betrieben werden können.

Eine weitere Teilaufgabe der vorliegenden Erfindung ist es, eine Brennkraftmaschine zur Durchführung des Verfahrens bereitzustellen.

Gelöst wird diese Aufgabe durch ein Verfahren zur Direkteinspritzung von Kraftstoff in den Brennraum einer Brennkraftmaschine, insbesondere zu dem Zweck einer verbesserten Gemischbildung, wobei der Brennraum durch den Kolbenboden eines Kolbens und einem Zylinderrohr mitbegrenzt wird, bei dem mittels einer zur Kolbenlängsachse im wesentlichen vertikal angeordneten Einspritzdüse mindestens eine Einspritzung von Kraftstoff vorgenommen wird, dadurch gekennzeichnet, daß
■ mittels der Einspritzdüse ein kegelförmiger Einspritzstrahl mit einem Öffnungswinkel α eingespritzt wird mit 85° ≤ α ≤ 140°,
■ der Kraftstoff im wesentlichen in eine im Kolbenboden vorgesehene Kolbenmulde eingespritzt wird, wobei
■ die Kolbenmulde mit einer im wesentlichen Omegaförmigen Grundform versehen wird, so daß

- die omegaförmige Kolbenmulde in der Art ausgebildet wird, daß die der Kolbenlängsachse zugewandte Muldenoberfläche zumindest in einem Teilbereich konvex ausgebildet ist, so daß die Muldenoberfläche in diesem Teilbereich in die Kolbenmulde hineinragt, und die Kolbenmulde zwischen diesem konvexen Teilbereich und einem die Kolbenmulde im Bereich des Kolbenbodens begrenzenden Kolbenmuldenrand einen konkaven Bereich aufweist,
- der Einspritzzeitpunkt mindestens einer Einspritzung in der Art gewählt wird, daß der Einspritzstrahl in den konvexen Teilbereich auf die Muldenoberfläche gelenkt wird, so dass
- der Einspritzstrahl beim Auftreffen auf die Muldenoberfläche in mehrere Teilstrahlen aufgeteilt wird, und
- im unteren Teillastbereich, in dem die Last weniger als 30% der Volllast beträgt, während der Kompressionsphase mehrere Einspritzungen vorgenommen werden, wobei der Einspritzdruck 300 bar bis 2000 bar beträgt und der eingespritzte Kraftstoff im wesentlichen nach dem HCCI-Verfahren verbrannt wird.

Im folgenden wird unter dem Begriff des herkömmlichen bzw. traditionellen dieselmotorischen Verfahrens in Zusammenhang mit dem hier in Rede stehenden erfindungsgemäßen Verfahren insbesondere auf die Verbrennung des herkömmlichen bzw. traditionellen dieselmotorischen Verfahrens Bezug genommen, die - im Gegensatz zu dem HCCI-Verfahren - mittels einer Diffusionsflamme kontrolliert wird.

Bei dem erfindungsgemäßen Verfahren wird der Einspritzstrahl im Vergleich zu den traditionellen dieselmotorischen Verfahren, bei denen der Einspritzstrahl einen Öffnungswinkel α > 145°, vorzugsweise α > 160°, aufweist, verengt. Dadurch können Einspritzungen weit beabstandet vom oberen Totpunkt (OT) vorgenommen werden, ohne daß eine Benetzung der Zylinderrohrinnenwand mit Kraftstoff zu befürchten ist und zwar sowohl in der Expansionsphase als auch in der Kompressionsphase.

Der erfindungsgemäß vorgeschlagene Öffnungswinkel unterstützt damit das HCCI-Verfahren, welches eine sehr frühe Einspritzung vor OT bzw. eine sehr späte Einspritzung d.h. nach OT vorzieht bzw. voraussetzt.

Gleichzeitig wird dadurch aber nicht die Gemischbildung im Rahmen des traditionellen dieselmotorischen Verfahrens bei hohen Drehzahlen und hohen Lasten verschlechtert. Denn obwohl der Öffnungswinkel α kleiner ist und der Einspritzstrahl nicht den gesamten Brennraum erfaßt, kann eine schnelle Durchmischung des eingespritzten Kraftstoffes mit den verdichteten Gasen sichergestellt werden.

Erreicht wird dies durch die Ausnutzung der kinetischen Energie des Kraftstoff-Einspritzstrahles, der beim Auftreffen auf die Muldenoberfläche der Omegaförmigen Kolbenmulde in mehrere Teilstrahlen aufgeteilt wird. Beim Auftreffen wird der Kraftstoff in mehrere divergierende Kraftstoff-Teilstrahlen aufgeteilt und aus der Kolbenmulde heraus beschleunigt, wo er sich mit der außerhalb der Mulde befindlichen Luft vermischt, insbesondere mit der in der Quetschzone vorhandenen Luft, so daß eine optimale Luftausnutzung gewährleistet ist. Der vergleichsweise eng gewählte Öffnungswinkel des Einspritzstrahles wird durch eine beschleunigte Durchmischung zumindest kompensiert.

Die Aufsplittung des Einspritzstrahles in mehrere Teilstrahlen und das Beschleunigen dieser Teilstrahlen aus der Kolbenmulde heraus unter Ausnutzung der kinetischen Energie des eingespritzten Kraftstoffes unterstützt grundsätzlich die Gemischaufbereitung d. h. auch die Homogenisierung des Gemisches im Rahmen des HCCI-Verfahrens.

Mit dem vorgeschlagenen Öffnungswinkel hebt sich das erfindungsgemäße Verfahren auch von den sogenannten wandgeführten Verfahren ab, die einen sehr engen Öffnungswinkel α < 85°, vorzugsweise α < 60°, verwenden, und den Kraftstoff nahezu mittig in eine Omegaförmige Mulde einspritzen, wobei der Kraftstoff gezielt tangential auf die Muldenoberfläche gespritzt wird und mittels der Muldenoberfläche geführt wird. Diese wandgeführten Verfahren haben den Nachteil, daß viel Zeit benötigt wird, um den Kraftstoff aus der Mulde bis in die Quetschzone hinein zu transportieren.

Das erfindungsgemäße Einspritzverfahren ermöglicht einen Betrieb der Brennkraftmaschine sowohl nach dem dieselmotorischen Verfahren als auch nach dem HCCI-Verfahren, so daß in Abhängigkeit vom jeweiligen Betriebspunkt der Brennkraftmaschine im Motorkennfeld entweder das HCCI-Verfahren oder das traditionelle dieselmotorische Verfahren zum Einsatz kommen kann.

Darüber hinaus sind auch Mischformen möglich, bei denen der in den Zylinder eingespritzte Kraftstoff teilweise als homogenisierte Ladung kontrolliert selbst zündet (HCCI-Verfahren) und teilweise nach dem traditionellen Verfahren - mittels Diffusionsflamme kontrolliert - als inhomogenes Gemisch verbrannt wird. So kann beispielsweise eine kleine Kraftstoffmenge im Rahmen einer Voreinspritzung früh d.h. weit beabstandet vom OT eingespritzt und gemäß dem HCCI-Verfahren verbrannt werden. Eine zweite Einspritzung einer größeren Kraftstoffmenge, die auch als Haupteinspritzung bezeichnet werden kann und spät erfolgt d.h. nahe dem OT, würde sich mit den Verbrennungsprodukten der Voreinspritzung mischen und inhomogen nach dem herkömmlichen dieselmotorischen Verfahren verbrennen.

Dadurch wird die erste der Erfindung zugrunde liegende Aufgabe gelöst, nämlich ein Verfahren zur Direkteinspritzung von Kraftstoff in den Brennraum einer Brennkraftmaschine gemäß dem Oberbegriff des Anspruches 1 aufzuzeigen, mit dem Dieselmotoren sowohl mit dem herkömmlichen dieselmotorischen Verfahren als auch mit dem HCCI-Verfahren betrieben werden können.

Damit macht das erfindungsgemäße Einspritzverfahren das HCCI-Verfahren für Dieselmotoren zumindest im Teillastbereich nutzbar. Im Teillastbereich weist der nach dem erfindungsgemäßen Verfahren betriebene Dieselmotor aufgrund der vergleichsweise niedrigen Verbrennungstemperaturen geringe Stickoxidemissionen (NOₓ) auf und infolge des mageren homogenisierten Gemisches keine Rußemissionen.

Weitere Vorteile des erfindungsgemäßen Verfahrens werden im Zusammenhang mit den Ausführungsformen gemäß den Unteransprüchen erörtert.

Vorteilhaft sind Ausführungsformen des Verfahrens, bei denen mittels der Einspritzdüse ein kegelförmiger Einspritzstrahl mit einem Öffnungswinkel α eingespritzt wird mit 95° ≤ α ≤ 130°, vorzugsweise mit 110° ≤ α ≤ 130°. Je enger der Einspritzstrahl gefaßt wird desto weiter beabstandet vom oberen Totpunkt (OT) können Einspritzungen vorgenommen werden, ohne daß eine Benetzung der Zylinderrohrinnenwand mit Kraftstoff erfolgt. Das erfindungsgemäße Verfahren kann damit in einem größeren Kurbelwinkelfenster durchgeführt werden.

Vorteilhaft sind Ausführungsformen des Verfahrens, bei denen der eingespritzte Kraftstoff vor dem Auftreffen auf die Muldenoberfläche verdampft wird. Dadurch wird verhindert, daß die Muldenoberfläche mit flüssigem Kraftstoff benetzt wird, was die Emission an unverbrannten Kohlenwasserstoffen (HC) signifikant erhöhen würde und somit im Hinblick auf eine gutes Emissionsverhalten vorzugsweise zu vermeiden ist.

Eine nach außen gewölbte Muldenoberfläche unterstützt die Aufsplittung des Einspritzstrahles in eine Vielzahl von Teilstrahlen und damit die Gemischaufbereitung wesentlich effizienter als eine herkömmliche, nach innen gewölbte Muldenoberfläche. Trifft der Kraftstoffstrahl auf eine derartig konvex ausgeformte Muldenoberfläche wird der Kraftstoff unter Ausnutzung der kinetischen Energie in Form mehrerer Teilstrahlen reflektiert, wobei die Teilstrahlen divergieren und aufgrund der konvexen Wölbung breit gestreut werden, so daß die reflektierten Teilstrahlen einen weiten Bereich des Brennraumes erfassen, was eine große Luftausnutzung sicherstellt.

Die Gemischaufbereitung ist vor dem Beginn der Verbrennung im wesentlichen bereits abgeschlossen, so daß der Grad der Homogenisierung sehr hoch ist und das Kraftstoff-Luftgemisch nach dem HCCI-Verfahren verbrennt. Infolge der frühen Verbrennung kann diese Verfahrensvariante nicht auf andere Lastbereiche erstreckt werden. Eine Beschränkung der Anwendung ergibt sich insbesondere durch den großen Druckanstieg und den maximalen Zylinderdruck, so daß selbst im Teillastbereich die zulässigen Grenzwerte erreicht werden können.

Der größte Teil der Wärme wird nahe des oberen Totpunktes (OT) freigesetzt und ist durch eine hohe Kraftstoffumsatzrate und einen großen Druckgradienten gekennzeichnet. Häufig wird bereits eine kleine Wärmemenge 15°KW bis 20°KW vorher freigegeben, die auf die bei niedrigeren Temperaturen ablaufenden Reaktionen im Gemisch zurückzuführen ist.

Vorteilhaft sind bei dieser Verfahrensvariante Ausführungsformen, bei denen eine Abgasrückführung (AGR) vorgenommen wird mit einer AGR-Rate bis zu 80%. Dabei wird das Abgas in der Regel gekühlt zurückgeführt, wobei im Rahmen des HCCI-Verfahrens wesentlich höhere AGR-Raten als bei herkömmlichen dieselmotorischen Verfahren realisierbar sind, da selbst für späte Einspritzzeitpunkte eine hohe Homogenisierung des Gemisches gewährleistet werden kann.

Durch das zurückgeführte Abgas wird der Zündverzug vergrößert und die Selbstzündung des Dieselkraftstoffes nach spät verschoben. Eine 15% höhere AGR-Rate verschiebt den Zündzeitpunkt beispielsweise um 10°KW nach spät. Dadurch können gleichzeitig sowohl die Stickoxide als auch die Rußemissionen gesenkt werden.

Vorteilhaft sind dabei Ausführungsformen des Verfahrens, bei denen die AGR-Rate 45% bis 65% beträgt.

Vorteilhaft sind Ausführungsformen des Verfahrens, bei denen im mittleren und oberen Teillastbereich, in dem die Last mehr als 30% und weniger als 70% der Volllast beträgt, während der Kompressionsphase mehrere Einspritzungen vorgenommen werden, wobei der Einspritzdruck 300 bar bis 2000 bar beträgt und der eingespritzte Kraftstoff teilweise nach dem HCCI-Verfahren und teilweise nach dem herkömmlichen dieselmotorischen Verfahren verbrannt wird. D.h. ein Teil des eingespritzten Kraftstoffes wird mittels einer Diffusionsflamme verbrannt.

Herkömmliche Verfahren zur Gemischbildung arbeiten mit der Unterstützung eines gezielt generierten Dralls. Die geometrischen Abmessungen der Kolbenmulde, der Einspritzdüse, insbesondere des Öffnungswinkels der Düse und des Einlaßkanals sind auf eine Verbrennung in einem sehr engen Kurbelwinkelfenster um den oberen Totpunkt (OT) herum ausgelegt. Die Verbrennung zeichnet sich durch eine kurzen Zündverzug und ein lediglich vorgemischtes inhomogenes Kraftstoff-Luftgemisch aus, weshalb eine Reduzierung der Stickoxide und des Rußes nicht möglich ist. Das heterogene Gemisch zündet vorzugsweise in fetten Gemischteilen unter Bildung von Ruß. Eine Reduzierung der NOₓ-Emissionen mittels Abgasrückführung wird dadurch beschränkt.

Das erfindungsgemäße Verfahren ermöglicht hingegen aufgrund der Beschleunigung der Mischungsvorgänge eine zumindest teilweise Verbrennung von im wesentlichen homogenisierten Gemischteilen. Eine kleine Kraftstoffmenge kann dabei im Rahmen einer Voreinspritzung früh d.h. weit beabstandet vom OT eingespritzt und gemäß dem HCCI-Verfahren verbrannt werden. Ein zweite Einspritzung einer größeren Kraftstoffmenge, die auch als Haupteinspritzung bezeichnet werden kann, erfolgt nahe dem oberen Totpunkt (OT), wobei der Kraftstoff inhomogen nach dem herkömmlichen dieselmotorischen Verfahren, das durch eine Diffusionsflamme gekennzeichnet ist, verbrennt. Die Freisetzung der Verbrennungswärme erfolgt dabei im wesentlichen in einem Bereich 15°KW vor OT bis 15°KW nach OT. Das erfindungsgemäße Verfahren gewährleistet damit bei steigender Last einen weichen Übergang vom HCCI-Verfahren zum herkömmlichen dieselmotorischen Verfahren, das sich durch eine diffusionskontrollierte Verbrennung auszeichnet.

Vorteilhaft sind dabei Ausführungsformen des Verfahrens, bei denen eine Abgasrückführung (AGR) vorgenommen wird mit einer AGR-Rate bis zu 80%, wobei die AGR-Rate vorzugsweise 45% bis 65% beträgt.

Vorteilhaft sind Ausführungsformen des Verfahrens, bei denen bei Lasten, die mehr als 70% der Vollast betragen, mindestens eine Einspritzung vorgenommen wird und der eingespritzte Kraftstoff im wesentlichen nach dem herkömmlichen dieselmotorischen Verfahren verbrannt wird.

Die zweite der Erfindung zugrundeliegende Teilaufgabe wird gelöst durch ein System umfassend eine Einspritzdüse und einen Kolben, insbesondere zur Durchführung eines Verfahrens nach einem der vorherigen Ansprüche, bei dem die im wesentlichen parallel zur Kolbenlängsachse angeordnete Einspitzdüse Düsenöffnungen aufweist, über die Kraftstoff in Form eines kegelförmigen Einspritzstahls einspritzbar ist, und eine im Kolbenboden vorgesehene Kolbenmulde eine Omegaförmige Grundform aufweist, und das dadurch gekennzeichnet ist, daß die Düsenöffnungen der Einspritzdüse in der Art ausgebildet sind, daß der kegelförmige Einspritzstrahl einen Öffnungswinkel α aufweist mit 85° ≤ α ≤ 140°.

Das bereits für das erfindungsgemäße Verfahren Gesagte gilt auch für die erfindungsgemäße Brennkraftmaschine.

Vorteilhaft sind Ausführungsformen des Systems, bei denen die Düsenöffnungen der Einspritzdüse in der Art ausgebildet sind, daß der kegelförmige Einspritzstrahl einen Öffnungswinkel α aufweist mit 95° ≤ α ≤ 130°, vorzugsweise mit 110° ≤ α ≤ 130°.

Der Kolbenlängsachse zugewandte Muldenoberfläche der Omegaförmigen Kolbenmulde weist einen konvexen Teilbereich auf, der in die Kolbenmulde hineinragt. Diese Ausbildung der Kolbenmulde unterstützt die Aufsplittung des Einspritzstrahles und damit die Gemischaufbereitung durch eine verbesserte Luftausnutzung.

Vorteilhaft sind Ausführungsformen des Systems, bei denen die die Kolbenmulde Einhüllende einen Durchmesser d aufweist mit d = 0,45 bis 0,8 D, vorzugsweise mit d = 0,55 bis 0,75 D, wobei D den Kolbendurchmesser angibt.

Der konvexe Teilbereich weist im mittleren Bereich einen Krümmungsradius r₁ mit 0,35 d ≤ r₁ ≤ 0,65 d, vorzugsweise mit 0,4 d ≤ r₁ ≤ 0,6 d auf.

Die Kolbenmulde weist zwischen dem konvexen Teilbereich und einem die Kolbenmulde im Bereich des Kolbenbodens begrenzenden Kolbenmuldenrand einen konkaven Bereich auf.

Vorteilhaft sind dabei wiederum Ausführungsformen des Systems, bei denen der konkave Bereich einen Krümmungsradius r₂ aufweist mit 0,1 d ≤ r₂ ≤ 0,35 d, vorzugsweise mit 0,15 d ≤ r₂ ≤ 0,3 d.

Vorteilhaft sind Ausführungsformen des Systems, bei denen die die Kolbenmulde Einhüllende eine Höhe t aufweist mit t = 0,1 bis 0,3 D, vorzugsweise mit t = 0,15 bis 0,25 D.

Vorteilhaft sind Ausführungsformen des Systems, bei denen die Einspritzdüse fünf bis neun Düsenöffnungen aufweist.

Vorteilhaft sind Ausführungsformen des Systems, bei denen die Kolbenmulde in ihrer Mitte eine Tiefe t₁ aufweist mit t₁ < 0,3 t. Dadurch verfügt der erfindungsgemäße Kolben über eine gegenüber herkömmlichen Kolben vergleichsweise geringe minimale Tiefe bezogen auf die maximale Tiefe.

Im folgenden wird die Erfindung anhand eines Ausführungsbeispieles gemäß den Figuren 1 bis 4 näher beschrieben. Hierbei zeigt:
- Fig.1: ein Motorenkennfeld eines herkömmlichen Dieselmotors,
- Fig. 2: schematisch eine Ausführungsform des Systems im Querschnitt mit einer Einspritzung nahe dem oberen Totpunkt (OT),
- Fig. 3: die in Figur 2 dargestellte Ausführungsform in einer perspektivischen Darstellung,
- Fig. 4: schematisch eine Kolbenmulde eines Kolbens des Systems im Halbschnitt,
- Fig. 5: schematisch die in Figur 2 dargestellte Ausführungsform des Systems im Querschnitt mit einer Einspritzung beabstandet zum oberen Totpunkt (OT), und
- Fig. 6: schematisch einen Kolben eines Systems im Querschnitt.

Figur 1 wurde bereits im Zusammenhang mit dem Stand der Technik beschrieben.

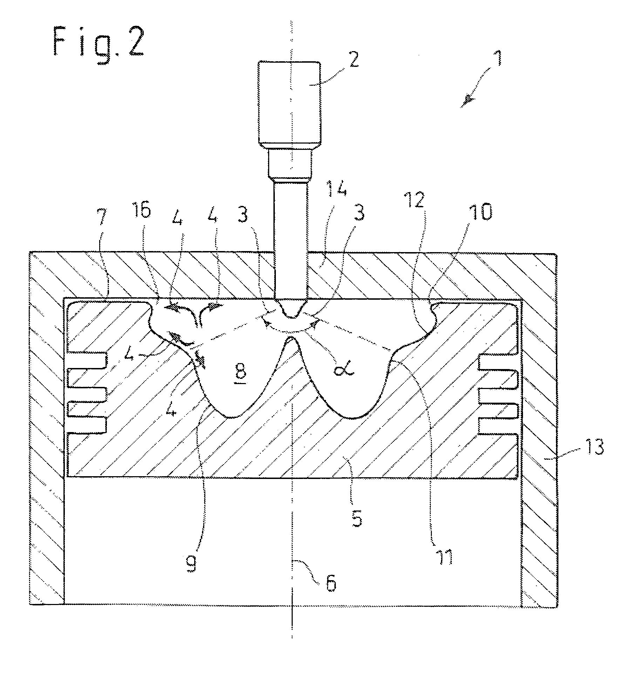

Figur 2 zeigt schematisch eine Ausführungsform des Systems 1 im Querschnitt mit einer Einspritzung nahe dem oberen Totpunkt (OT).

Das System 1 umfaßt eine Einspritzdüse 2 und einen Kolben 5, wobei die Einspitzdüse 2 im wesentlichen parallel zur Kolbenlängsachse 6 des Kolbens 5 angeordnet ist und bei der dargestellten Ausführungsform sogar entlang der Kolbenlängsachse 6 ausgerichtet ist.

Über die Düsenöffnungen spritzt die Einspritzdüse 2 Kraftstoff in Form eines kegelförmigen Einspritzstahls 3 in den Brennraum 16, der durch den Kolbenboden 7 des Kolbens 5, das Zylinderrohr 13 und den Zylinderkopf 14 mitbegrenzt wird.

Im Kolbenboden 7 ist eine Kolbenmulde 8 vorgesehen, die eine omegaförmige Grundform aufweist. Die Muldenoberfläche 9 weist in dem der Kolbenlängsachse 6 zugewandten Oberflächenabschnitt einen konvexen Teilbereich 11 auf, der in die Kolbenmulde 8 hineinragt. Der Öffnungswinkel α des kegelförmigen Einspritzstrahls 3 beträgt in etwa α ≈ 125° und ist - bei der in Figur 2 dargestellten Ausführungsform - in der Art auf die Muldenform abgestimmt, daß die Einspritzstrahlen 3 im Bereich des konvexen Teilbereichs 11 auf die Muldenoberfläche 9 treffen, wenn der Kolben sich - wie in Figur 2 dargestellt - nahe des oberen Totpunktes (OT) befindet.

Unter Ausnutzung der kinetischen Energie der eingespritzten Kraftstoffstrahlen 3 werden diese Einspritzstrahlen 3 beim Auftreffen auf die Muldenoberfläche 9 der Omegaförmigen Kolbenmulde 8 in mehrere Teilstrahlen 4 aufgeteilt. Beim Auftreffen in dem konvexen Teilbereich 11 der Muldenoberfläche 9 wird der Kraftstoff in mehrere divergierende Kraftstoff-Teilstrahlen 4 aufgesplittet und auch teilweise aus der Kolbenmulde 8 heraus beschleunigt, wo er sich mit der außerhalb der Mulde 8 befindlichen Luft vermischt. Eine zusätzliche Aufsplittung kann unterstützend an der Innenseite des Zylinderkopfes 14 erfolgen.

Dadurch gelangt der Kraftstoff mit nur geringer Verzögerung auch zu der in der Quetschzone zwischen Kolbenboden 7 und Zylinderkopf 14 vorhandenen Luft. Insgesamt wird durch das Zusammenwirken des vergleichsweise engen Einspritzstrahls 3 mit der erfindungsgemäß ausgebildeten Kolbenmulde 8 eine schnelle und optimale Luftausnutzung gewährleistet. Der vergleichsweise eng gewählte Öffnungswinkel α des Einspritzstrahles 3 wird durch eine beschleunigte Durchmischung zumindest kompensiert.

Eine schnelle Durchmischung bzw. Gemischaufbereitung ist insbesondere bei Einspritzungen nahe des oberen Totpunktes (OT) erforderlich, wenn kurze Zündverzüge für eine schnelle Selbstzündung des Kraftstoff-Luftgemisches sorgen, wie dies in der Regel der Fall ist, wenn die Brennkraftmaschine nahe der Vollast betrieben wird und der Kraftstoff nach dem traditionellen dieselmotorischen Verfahren verbrannt wird.

Zwischen dem konvexen Teilbereich 11 und dem Kolbenmuldenrand 10, der die Kolbenmulde 8 zum Kolbenboden 7 hin begrenzt, weist die Muldenoberfläche 9 zusätzlich einen konkaven Bereich 12 auf.

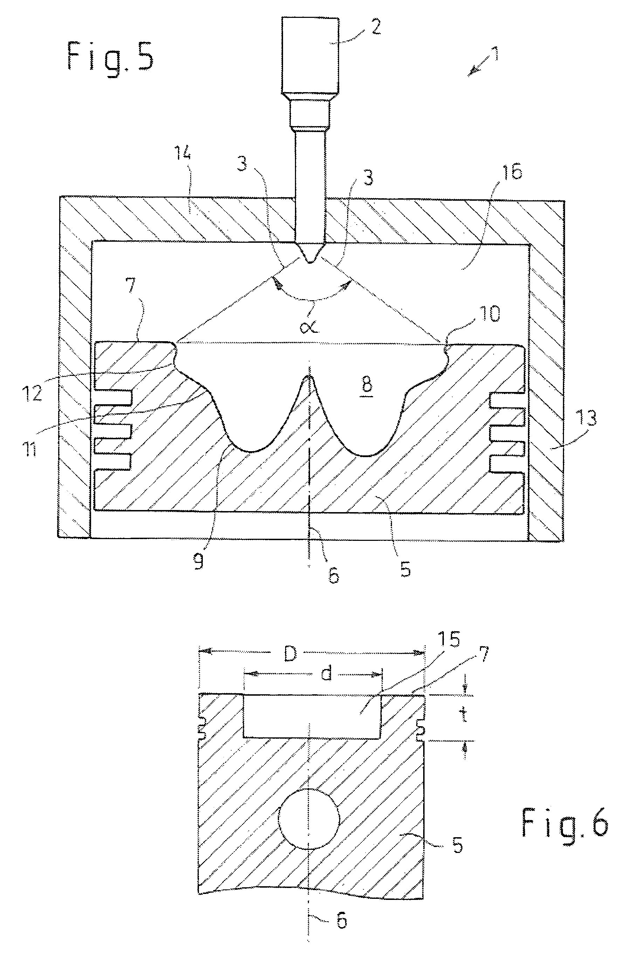

Wie Figur 2 ebenfalls entnommen werden kann, stellt der erfindungsgemäß eng gewählte Öffnungswinkel α sicher, daß auch dann Kraftstoff ohne Benetzung des Zylinderrohres 13 eingespritzt werden kann, wenn der Kolben 5 weiter beabstandet zum oberen Totpunkt (OT) angeordnet ist. Dies unterstützt das HCCI-Verfahren, das auf einer ausreichenden Homogenisierung des Kraftstoff-Luftgemisches basiert, was weiter unten noch näher im Zusammenhang mit Figur 5 erörtert werden wird.

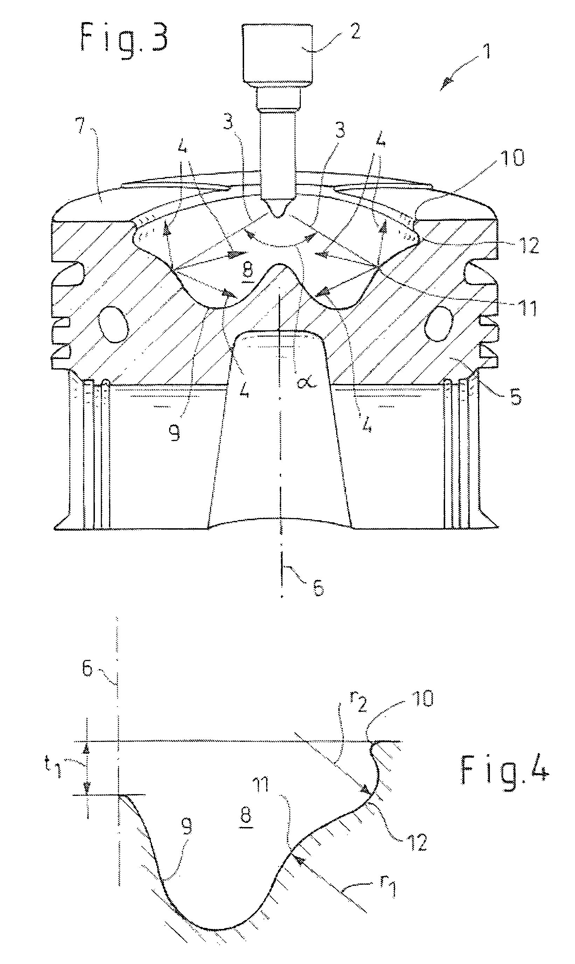

Figur 3 zeigt die in Figur 2 dargestellte Ausführungsform in einer perspektivischen Darstellung und zwar im Halbschnitt.

Es sollen nur ergänzend Ausführungen zu der in Figur 2 dargestellten Ausführungsform gemacht werden, weshalb im übrigen Bezug genommen wird auf Figur 2. Für dieselben Bauteile wurden dieselben Bezugszeichen verwendet.

Bei der in Figur 3 gewählten Darstellungsform wird ersichtlich, daß sich der konvexe Oberflächenbereich 11 der Muldenoberfläche 9 ringförmig über den gesamten Umfang der Mulde 8 erstreckt und die Mulde 8 symmetrisch zur Kolbenlängsachse 6 ausgebildet ist.

Figur 4 zeigt schematisch eine Kolbenmulde 8 eines Kolbens 5 des Systems 1 im Halbschnitt, um die wesentlichen geometrischen Abmessungen des erfindungsgemäßen Kolbens 5 zu erläutern.

Die Kolbenmulde 8 weist in ihrer Mitte d. h. gemessen entlang der Kolbenlängsachse 6 ihre minimale Tiefe t₁ auf. Der konvexe Teilbereich 11 der Muldenoberfläche 9, der der Kolbenlängsachse 6 zugewandt ist, verfügt zumindest im mittleren Bereich über einen Krümmungsradius r₁. Der zwischen diesem konvexen Teilbereich 11 und dem Kolbenmuldenrand 10 vorgesehene konkave Bereich 12 der Kolbenmulde 8 weist einen Krümmungsradius r₂ auf.

Figur 5 zeigt schematisch die in Figur 2 dargestellte Ausführungsform des Systems 1 im
Querschnitt mit einer Einspritzung beabstandet zum oberen Totpunkt (OT).

Es sollen nur die Unterschiede zu der in Figur 2 gezeigten Darstellung erörtert werden, weshalb im übrigen Bezug genommen wird auf Figur 2. Für dieselben Bauteile wurden dieselben Bezugszeichen verwendet.

Im Unterschied zu der in Figur 2 gezeigten Darstellung befindet sich bei der in Figur 3 gewählten Darstellungsform der Kolben 5 nicht nahe dem oberen Totpunkt (OT), sondern ist beabstandet zum oberen Totpunkt (OT) angeordnet.

Die aus der Einspritzdüse 2 austretenden Kraftstoffstrahlen 3 treffen im Bereich des Muldenrandes 10 auf die Muldenoberfläche 9 und werden dort zerstäubt bzw. in mehrere Teilstrahlen aufgesplittet. Damit gelangt der wesentliche Teil des eingespritzten Kraftstoff-Luftgemisches in die Mulde 8, ohne daß Kraftstoff auf das Zylinderrohr 13 trifft. Prinzipiell könnte noch früher mit der Einspritzung begonnen werden als dies in Figur 5 dargestellt ist, ohne eine Zylinderrohrbenetzung befürchten zu müssen.

Der Kolben 5 ist weit vom oberen Totpunkt (OT) beabstandet angeordnet, so daß genügend Zeit zu einer ausreichenden Homogenisierung des Kraftstoff-Luftgemischs bzw. bis zu dessen Selbstzündung verbleibt. Dabei soll die Schraffierung die Homogenisierung bzw. den Grad der Homogenisierung symbolisieren. Mit dem gezeigten Einspritzszenario könnte die Brennkraftmaschine im unteren bis mittleren Teillastbereich betrieben werden, wobei der eingespritzte Kraftstoff gemäß dem HCCI-Verfahren verbrannt wird.

Abschließend sind in Figur 6 anhand eines schematisch im Querschnitt dargestellten Kolbens 5 die drei Parameter eingetragen, die zur Beschreibung der Einhüllenden 15 der Kolbenmulde dienen. Als Bezugsgröße dient der Kolbendurchmesser D gemessen in der Ebene des Kolbenbodens 7. Die Einhüllende 15 hat eine Tiefe t, die mit der maximalen Tiefe der Mulde übereinstimmt, und einen Durchmesser d, wobei die Einhüllende 15 - wie die Mulde - symmetrisch zur Kolbenlängsachse 6 angeordnet ist.

### Bezugszeichen

- 1: System
- 2: Einspritzdüse
- 3: Einspritzstrahl
- 4: Teilstrahl
- 5: Kolben
- 6: Kolbenlängsachse
- 7: Kolbenboden
- 8: Kolbenmulde
- 9: Muldenoberfläche
- 10: Muldenrand
- 11: konvexer Teilbereich
- 12: konkaver Bereich
- 13: Zylinderrohr
- 14: Zylinderkopf
- 15: Einhüllende
- 16: Brennraum

- α: Öffnungswinkel der Einspritzdüse (2)
- d: maximaler Muldendurchmesser, Durchmesser der Einhüllenden
- D: Kolbendurchmesser
- KW: Kurbelwinkel
- OT: oberer Totpunkt
- r₁: Krümmungsradius des konvexen Teilbereichs (11)
- r₂: Krümmungsradius des konkaven Bereichs (12)
- t: maximale Muldentiefe, Tiefe der Einhüllenden
- t₁: minimale Tiefe in der Mitte der Kolbenmulde (8)

## Patentansprüche

1. Verfahren zur Direkteinspritzung von Kraftstoff in den Brennraum einer Brennkraftmaschine, insbesondere zu dem Zweck einer verbesserten Gemischbildung, wobei der Brennraum (16) durch den Kolbenboden (7) eines Kolbens (5) und ein Zylinderrohr (13) mitbegrenzt wird, bei dem
■ mittels einer zur Kolbenlängsachse (6) im wesentlichen parallel angeordneten Einspritzdüse (2) mindestens eine Einspritzung von Kraftstoff vorgenommen wird,
■ mittels der Einspritzdüse (2) ein kegelförmiger Einspritzstrahl (3) mit einem Öffnungswinkel α eingespritzt wird mit 85° ≤ α ≤ 140°,
■ der Kraftstoff im wesentlichen in eine im Kolbenboden (7) vorgesehene Kolbenmulde (8) eingespritzt wird, und
■ die Kolbenmulde (8) mit einer im wesentlichen omegaförmigen Grundform versehen wird,
**dadurch gekennzeichnet, daß**
■ die omegaförmige Kolbenmulde (8) in der Art ausgebildet wird, daß die der Kolbenlängsachse (6) zugewandte Muldenoberfläche (9) zumindest in einem Teilbereich (11) konvex ausgebildet ist, so daß die Muldenoberfläche (9) in diesem Teilbereich (11) in die Kolbenmulde (8) hineinragt, und die Kolbenmulde (8) zwischen diesem konvexen Teilbereich (11) und einem die Kolbenmulde (8) im Bereich des Kolbenbodens (7) begrenzenden Kolbenmuldenrand (10) einen konkaven Bereich (12) aufweist,
■ der Einspritzzeitpunkt mindestens einer Einspritzung in der Art gewählt wird, daß der Einspritzstrahl (3) in den konvexen Teilbereich (11) auf die Muldenoberfläche (9) gelenkt wird, so dass
■ der Einspritzstrahl (3) beim Auftreffen auf die Muldenoberfläche (9) in mehrere Teilstrahlen (4) aufgeteilt wird, und
■ im unteren Teillastbereich, in dem die Last weniger als 30% der Volllast beträgt, während der Kompressionsphase mehrere Einspritzungen vorgenommen werden, wobei der Einspritzdruck 300 bar bis 2000 bar beträgt und der eingespritzte Kraftstoff im wesentlichen nach dem HCCI-Verfahren verbrannt wird.

2. Verfahren nach Anspruch 1,
**dadurch gekennzeichnet, daß**
mittels der Einspritzdüse (2) ein kegelförmiger Einspritzstrahl (3) mit einem Öffnungswinkel α eingespritzt wird mit 95° ≤ α ≤ 130°, vorzugsweise mit 110° ≤ α ≤ 130°.

3. Verfahren nach Anspruch 1 oder 2,
**dadurch gekennzeichnet, daß**
der eingespritzte Kraftstoff vor dem Auftreffen auf die Muldenoberfläche (9) verdampft wird.

4. Verfahren nach einem der vorherigen Ansprüche,
**dadurch gekennzeichnet, daß**
eine Abgasrückführung (AGR) vorgenommen wird mit einer AGR-Rate bis zu 80%.

5. Verfahren nach Anspruch 4,
**dadurch gekennzeichnet, daß**
die AGR-Rate 45% bis 65% beträgt.

6. Verfahren nach einem der Ansprüche 1 bis 3,
**dadurch gekennzeichnet, daß**
im mittleren und oberen Teillastbereich, in dem die Last mehr als 30% und weniger als 70% der Volllast beträgt, während der Kompressionsphase mehrere Einspritzungen vorgenommen werden, wobei der Einspritzdruck 300 bar bis 2000 bar beträgt und der eingespritzte Kraftstoff teilweise nach dem HCCI-Verfahren und teilweise nach dem herkömmlichen dieselmotorischen Verfahren verbrannt wird.

7. Verfahren nach Anspruch 6,
**dadurch gekennzeichnet, daß**
eine Abgasrückführung (AGR) vorgenommen wird mit einer AGR-Rate bis zu 80%, wobei die AGR-Rate vorzugsweise 45% bis 65% beträgt.

8. Verfahren nach einem der Ansprüche 1 bis 3,
**dadurch gekennzeichnet, daß**
bei Lasten, die mehr als 70% der Volllast betragen, mindestens eine Einspritzung vorgenommen wird und der eingespritzte Kraftstoff im wesentlichen nach dem herkömmlichen dieselmotorischen Verfahren verbrannt wird.

9. System (1) umfassend eine Einspritzdüse (2) und einen Kolben (5), insbesondere zur Durchführung eines Verfahrens nach einem der vorherigen Ansprüche, bei dem
■ die im wesentlichen parallel zur Kolbenlängsachse (6) angeordnete Einspitzdüse (2) Düsenöffnungen aufweist, über die Kraftstoff in Form eines kegelförmigen Einspritzstahls (3) einspritzbar ist,
■ eine im Kolbenboden (7) vorgesehene Kolbenmulde (8) eine omegaförmige Grundform aufweist, und
■ die Düsenöffnungen der Einspritzdüse (2) in der Art ausgebildet sind, daß der kegelförmige Einspritzstrahl (3) einen Öffnungswinkel α aufweist mit 85° ≤ α ≤ 140°,
**dadurch gekennzeichnet, daß**
■ die der Kolbenlängsachse (6) zugewandte Muldenoberfläche (9) der omegaförmigen Kolbenmulde (8) einen konvexen Teilbereich (11) aufweist, der in die Kolbenmulde (8) hineinragt,
■ die Kolbenmulde (8) zwischen diesem konvexen Teilbereich (11) und einem die Kolbenmulde (8) im Bereich des Kolbenbodens (7) begrenzenden Kolbenmuldenrand (10) einen konkaven Bereich (12) aufweist, und
■ der konvexe Teilbereich (11) im mittleren Bereich einen Krümmungsradius ■ aufweist mit 0,35 d ≤ r₁ ≤ 0,65 d.

10. System (1) nach Anspruch 9,
**dadurch gekennzeichnet, daß**
die Düsenöffnungen der Einspritzdüse (2) in der Art ausgebildet sind, daß der kegelförmige Einspritzstrahl (3) einen Öffnungswinkel α aufweist mit 95° ≤ au ≤ 130°, vorzugsweise mit 110° ≤ α ≤ 130°.

11. System (1) nach Anspruch 9 oder 10,
**dadurch gekennzeichnet, daß**
die die Kolbenmulde (8) Einhüllende (15) einen Durchmesser d aufweist mit d = 0,45 bis 0,8 D, vorzugsweise mit d = 0,55 bis 0,75 D, wobei D den Kolbendurchmesser angibt.

12. System (1) nach einem der Ansprüche 9 bis 11,
**dadurch gekennzeichnet, daß**
der konvexe Teilbereich (11) im mittleren Bereich einen Krümmungsradius r₁ aufweist mit 0,4 d ≤ r₁ ≤ 0,6 d.

13. System (1) nach einem der Ansprüche 9 bis 12,
**dadurch gekennzeichnet, daß**
der konkave Bereich (12) einen Krümmungsradius r₂ aufweist mit 0,1 d ≤ r₂ ≤ 0,35 d, vorzugsweise mit 0,15 d ≤ r₂ ≤ 0,3 d.

14. System (1) nach einem der Ansprüche 9 bis 13,
**dadurch gekennzeichnet, daß**
die die Kolbenmulde (8) Einhüllende (15) eine Höhe t aufweist mit t = 0,1 bis 0,3 D, vorzugsweise mit t = 0,15 bis 0,25 D.

15. System (1) nach einem der Ansprüche 9 bis 14,
**dadurch gekennzeichnet, daß**
die Einspritzdüse (2) fünf bis neun Düsenöffnungen aufweist.

16. System (1) nach einem der Ansprüche 9 bis 15,
**dadurch gekennzeichnet, daß**
die Kolbenmulde (8) in ihrer Mitte eine minimale Tiefe t₁ aufweist mit t₁ < 0,3 t.

## Claims

1. Method for directly injecting fuel into the combustion chamber of an internal combustion engine, in particular for the purpose of obtaining improved mixture formation, with the combustion chamber (16) being delimited jointly by the piston crown (7) of a piston (5) and by a cylinder liner (13), in which method
■ at least one injection of fuel is carried out by means of an injection nozzle (2) arranged substantially parallel to the piston longitudinal axis (6),
■ a conical injection jet (3) with an opening angle α is injected by means of the injection nozzle (2), where 85° ≤ α ≤ 140°,
■ the fuel is injected substantially into a piston depression (8) provided in the piston crown (7), and
■ the piston crown (8) is provided with a substantially omega-shaped basic form,
**characterized in that**
■ the omega-shaped piston depression (8) is formed such that the depression surface (9) which faces toward the piston longitudinal axis (6) is of convex design at least in a partial region (11), such that the depression surface (9) projects into the piston depression (8) in said partial region (11), and the piston depression (8) has a concave region (12) between said convex partial region (11) and a piston depression edge (10) which delimits the piston depression (8) in the region of the piston crown (7),
■ the injection time of at least one injection is selected such that the injection jet (3) is deflected onto the depression surface (9) in the convex partial region (11), such that
■ the injection jet (3) is split into a plurality of partial jets (4) when it impinges on the depression surface (9), and,
■ in the lower part-load range, in which the load is less than 30% of full load, a plurality of injections are carried out during the compression phase, with the injection pressure being 300 bar to 2000 bar and the injected fuel being burned substantially according to the HCCI process.

2. Method according to Claim 1,
**characterized in that**
a conical injection jet (3) with an opening angle α is injected by means of the injection nozzle (2), where 95° ≤ α ≤ 130°, preferably 110° ≤ α ≤ 130°.

3. Method according to Claim 1 or 2,
**characterized in that**
the injected fuel is evaporated before it impinges on the depression surface (9).

4. Method according to one of the preceding claims
**characterized in that**
exhaust-gas recirculation (EGR) is carried out with an EGR rate of up to 80%.

5. Method according to Claim 4,
**characterized in that**
the EGR rate is 45% to 65%.

6. Method according to one of Claims 1 to 3,
**characterized in that**,
in the medium and upper part-load range, in which the load is greater than 30% and less than 70% of full load, a plurality of injections are carried out during the compression phase, with the injection pressure being 300 bar to 2000 bar and the injected fuel being burned partially according to the HCCI process and partially according to the conventional diesel engine process.

7. Method according to Claim 6,
**characterized in that**
exhaust-gas recirculation (EGR) is carried out with an EGR rate of up to 80%, with the EGR rate preferably being 45% to 65%.

8. Method according to one of Claims 1 to 3,
**characterized in that**
at loads of greater than 70% of full load, at least one injection is carried out and the injected fuel is burned substantially according to the conventional diesel engine process.

9. System (1) comprising an injection nozzle (2) and
a piston (5), in particular for carrying out a method according to one of the preceding claims, in which system
■ the injection nozzle (2) arranged substantially parallel to the piston longitudinal axis (6) has nozzle openings via which fuel can be injected in the form of a conical injection jet (3),
■ a piston depression (8) provided in the piston crown (7) has an omega-shaped basic form, and
■ the nozzle openings of the injection nozzle (2) are designed such that the conical injection jet (3) has an opening angle α, where 85° ≤ α ≤ 140°,
**characterized in that**
■ the depression surface (9), which faces toward the piston longitudinal axis (6), of the omega-shaped piston depression (8) has a convex partial region (11) which projects into the piston depression (8),
■ the piston depression (8) has a concave region (12) between said convex partial region (11) and a piston depression edge (10) which delimits the piston depression (8) in the region of the piston crown (7), and
■ the convex partial region (11) has, in the central region, a radius of curvature r₁, where 0.35 d ≤ r₁ ≤ 0.65 d.

10. System (1) according to Claim 9,
**characterized in that**
the nozzle openings of the injection nozzle (2) are designed such that the conical injection jet (3) has an opening angle α, where 95° ≤ α ≤ 130 ° , preferably 110° ≤ α ≤ 130°.

11. System (1) according to Claim 9 or 10,
**characterized in that**
the envelope (15) of the piston depression (8) has a diameter d, where d = 0.45 to 0.8 D, preferably d = 0.55 to 0.75 D, where D denotes the piston diameter.

12. System (1) according to one of Claims 9 to 11,
**characterized in that**
the convex partial region (11) has, in the central region, a radius of curvature r₁, where 0.4 d ≤ r₁ ≤ 0.6 d.

13. System (1) according to one of Claims 9 to 12,
**characterized in that**
the concave region (12) has a radius of curvature r₂, where 0.1 d ≤ r₂ ≤ 0.35 d, preferably 0.15 d ≤ r₂ ≤ 0.3 d.

14. System (1) according to one of Claims 9 to 13,
**characterized in that**
the envelope (15) of the piston depression (8) has a height t, where t = 0.1 to 0.3 D, preferably t = 0.15 to 0.25 D.

15. System (1) according to one of Claims 9 to 14,
**characterized in that**
the injection nozzle (2) has five to nine nozzle openings.

16. System (1) according to one of Claims 9 to 15,
**characterized in that**
the piston depression (8) has, in its centre, a minimum depth t₁, where t₁ < 0.3 t.

## Revendications

1. Procédé pour l'injection directe de carburant dans la chambre de combustion d'un moteur à combustion interne, notamment en vue d'améliorer la formation du mélange, la chambre de combustion (16) étant limitée par le fond de piston (7) d'un piston (5) et un tube de cylindre (13),
- au moins une injection de carburant étant effectuée au moyen d'une buse d'injection (2) disposée essentiellement parallèlement à l'axe longitudinal du piston (6),
- un jet d'injection de forme conique (3) étant injecté au moyen de la buse d'injection (2) avec un angle d'ouverture α, avec 85° ≤ α ≤ 140°,
- le carburant étant injecté essentiellement dans une cavité de piston (8) prévue dans le fond de piston (7), et
- la cavité de piston (8) étant pourvue d'une forme de base essentiellement en forme d'oméga,
**caractérisé en ce que**
- la cavité de piston (8) en forme d'oméga est réalisée de telle sorte que la surface de la cavité (9) tournée vers l'axe longitudinal du piston (6) soit réalisée sous forme convexe au moins dans une région partielle (11), de sorte que la surface de la cavité (9) pénètre dans cette région partielle (11) dans la cavité de piston (8), et que la cavité de piston (8) entre cette région partielle convexe (11) et un bord de cavité de piston (10) limitant la cavité de piston (8) dans la région du fond de piston (7) présente une région concave (12),
- l'instant d'injection d'au moins une injection est choisi de telle sorte que le jet d'injection (3) soit dévié dans la région partielle convexe (11) sur la surface de la cavité (9), de sorte que
- le jet d'injection (3) soit divisé en plusieurs jets partiels (4) lors de son impact sur la surface de la cavité (9), et
- que, dans la région de charge partielle inférieure, dans laquelle la charge représente moins de 30 % de la pleine charge, pendant la phase de compression, plusieurs injections soient effectuées, la pression d'injection étant comprise entre 300 bar et 2000 bar et le carburant injecté étant essentiellement brûlé conformément au processus HCCI.

2. Procédé selon la revendication 1,
**caractérisé en ce**
**qu'**un jet d'injection de forme conique (3) est injecté au moyen de la buse d'injection (2) avec un angle d'ouverture α, avec 95° ≤ α ≤ 130°, de préférence avec 110° ≤ α ≤ 130°.

3. Procédé selon la revendication 1 ou 2,
**caractérisé en ce que**
le carburant injecté est vaporisé avant son impact sur la surface de la cavité (9).

4. Procédé selon l'une quelconque des revendications précédentes,
**caractérisé en ce que**
l'on effectue une recirculation des gaz d'échappement (RGE) avec un taux RGE allant jusqu'à 80%.

5. Procédé selon la revendication 4,
**caractérisé en ce que**
le taux RGE est compris entre 45% et 65%.

6. Procédé selon l'une quelconque des revendications 1 à 3,
**caractérisé en ce que**
dans la région de charge partielle centrale et supérieure, dans laquelle la charge vaut plus de 30 % et moins de 70 % de la pleine charge, pendant la phase de compression, plusieurs injections sont effectuées, la pression d'injection étant comprise entre 300 bar et 2000 bar et le carburant injecté étant brûlé en partie conformément au processus HCCI et en partie conformément au processus usuel d'un moteur diesel.

7. Procédé selon la revendication 6,
**caractérisé en ce que**
l'on effectue une recirculation des gaz d'échappement (RGE) avec un taux de RGE allant jusqu'à 80%, le taux de RGE étant de préférence compris entre 45% et 65%.

8. Procédé selon l'une quelconque des revendications 1 à 3,
**caractérisé en ce que**
dans le cas de charges qui représentent plus de 70% de la pleine charge, au moins une injection est effectuée et le carburant injecté est brûlé essentiellement conformément au processus usuel d'un moteur diesel.

9. Système (1) comprenant une buse d'injection (2) et un piston (5), notamment pour mettre en oeuvre un procédé selon l'une quelconque des revendications précédentes, dans lequel :
- la buse d'injection (2) disposée essentiellement parallèlement à l'axe longitudinal du piston (6) présente des ouvertures de buse, par le biais desquelles du carburant peut être injecté en forme de jet d'injection de forme conique (3),
- une cavité de piston (8) prévue dans le fond de piston (7) présente une forme de base en forme d'oméga, et
- les ouvertures de buse de la buse d'injection (2) sont réalisées de telle sorte que le jet d'injection de forme conique (3) présente un angle d'ouverture α, avec 85° ≤ α ≤ 140°,
**caractérisé en ce que**
- la surface de la cavité (9), tournée vers l'axe longitudinal du piston (6) de la cavité de piston (8) en forme d'oméga, présente une région partielle convexe (11) qui pénètre dans la cavité de piston (8),
- la cavité de piston (8) entre cette région partielle convexe (11) et un bord de cavité de piston (10) limitant la cavité de piston (8) dans la région du fond de piston (7) présente une région concave (12), et
- la région partielle convexe (11) dans la région centrale présente un rayon de courbure r₁ avec 0,35 d ≤ r₁ ≤ 0,65 d.

10. Système (1) selon la revendication 9,
**caractérisé en ce que**
les ouvertures de buse de la buse d'injection (2) sont réalisées de telle sorte que le jet d'injection de forme conique (3) présente un angle d'ouverture α, avec 95° ≤ α ≤ 130°, de préférence avec 110° ≤ α ≤ 130°.

11. Système (1) selon la revendication 9 ou 10,
**caractérisé en ce que**
l'enveloppante (15) de la cavité de piston (8) présente un diamètre d, avec d = 0,45 à 0,8 D, de préférence avec d = 0,55 à 0,75 D, D étant le diamètre du piston.

12. Système (1) selon l'une quelconque des revendications 9 à 11,
**caractérisé en ce que**
la région partielle convexe (11) dans la région centrale présente un rayon de courbure r₁ avec 0,4 d ≤ r₁ ≤ 0,6 d.

13. Système (1) selon l'une quelconque des revendications 9 à 12,
**caractérisé en ce que**
la région concave (12) présente un rayon de courbure r₂ avec 0,1 d ≤ r₂ ≤ 0,35 d, de préférence avec 0,15 d ≤ r₂ ≤ 0,3 d.

14. Système (1) selon l'une quelconque des revendications 9 à 13,
**caractérisé en ce que** l'enveloppante (15) de la cavité de piston (8) présente une hauteur t avec t = 0,1 à 0,3 D, de préférence avec t = 0,15 à 0,25 D.

15. Système (1) selon l'une quelconque des revendications 9 à 14,
**caractérisé en ce que**
la buse d'injection (2) présente cinq à neuf ouvertures de buses.

16. Système (1) selon l'une quelconque des revendications 9 à 15,
**caractérisé en ce que**
la cavité de piston (8) présente en son centre une profondeur minimale t₁ avec t₁ < 0,3 t.
